# EUROPEAN PATENT APPLICATION

(11) **EP 1 273 789 A1**
(43) Date of publication of application: **08.01.2003**
(21) Application number: 01850114.8
(22) Date of filing: 29.06.2001
(51) Int. Cl.: F02M 25/08, F02M 35/024, B01D 53/04, B01D 46/24, B01D 46/42

(54) **Carbon canister for air cleaner**

(71) Applicant: Ford Global Technologies, Inc., Dearborn, Michigan 48126-2490 (US)
(72) Inventor: Nilsson, Thomas, 444 92 Jörlanda (SE); Gendenberg, Kjell, 413 28 Göterborg (SE)
(74) Representative: Mossmark, Anders

(57) **Abstract**

Air cleaning means for an internal combustion engine comprising an induction air cleaning filter element placed in an induction air duct; and a fuel vapour absorbing filter element mounted adjacent to or separate from said air cleaning filter element in said induction air duct, said fuel vapour absorbing filter element including an absorbing filter layer, including a material such as active carbon, for absorbing fuel vapours, wherein the fuel vapour absorbing filter element is arranged to absorb fuel vapours in the induction air duct when the engine is switched off, and to allow induction air to flow freely past the fuel vapour absorbing filter element when the engine is running

## Description

### TECHNICAL FIELD

The invention relates to a carbon canister for an air cleaner intended to absorb fuel vapours from the engine induction system when the engine is switched off, while allowing induction air to flow unimpeded past the carbon canister when the engine is running.

### STATE OF THE ART

The problem of absorbing fuel vapours that remain in the induction air ducts after the engine has been switched off is generally known. Fuel that has been injected into the induction air ducts immediately before the engine is switched off, that has condensed on the walls of the induction air ducts, or vapours removed from the fuel tank canister to the induction air ducts, will under certain conditions evaporate and escape from the induction air ducts, through the air filter and into the atmosphere.

Until now the problem has been solved by placing an active carbon filter or canister in an induction air duct or an air filter in such a way that the carbon filter can cover the entire cross-sectional area of the duct or air filter. Although these solutions have been proven to be effective for absorbing fuel vapour and preventing their escape to the atmosphere, they have shown to be an impediment for the induction air in the normal direction of flow through the system. Any such restriction of the air flow through the induction system will cause the engine to operate with less efficiency.

Known solutions to the above problem are shown in US-A-3,572,014 and US-A-4,279,630, where an annular active carbon filter is placed inside a standard air filter in conjunction with the usual particle filter. This will result in two filters partially blocking the flow of air to the induction system when the engine is running. A similar system is shown in US-A-4,300,511, in which an assembly combines the functions of an air cleaner, valve cover and vacuum canister for storage of fuel vapours. However, the problem of an impeded flow of air during engine operation remains the same.

A further solution is shown in US-A-4,224,044, which instead of using a carbon canister simply blocks the flow of air in the direction from the induction air ducts to the air filter by means of a bellows valve. As soon as the engine is started, the low pressure in the induction air ducts will cause the valve to open. However, this system would not work for a supercharged engine, which may have a considerable pressure in the intake ducts. Also, a valve of this type may both leak vapours to the environment, due to deteriorating function with age, and be an obstacle to free flow of air to the engine, during opening and closing as well as when it is fully opened.

### DESCRIPTION OF THE INVENTION

Hence there is a need for an arrangement that provides both absorption of fuel vapours when the engine is switched off and free, unimpeded flow of induction air to the engine when it is running.

This is achieved by means of an arrangement according to claim 1 and its dependent claims, as described below.

The arrangement according to the invention discloses an air cleaning means for an internal combustion engine comprising an induction air cleaning filter element placed in an induction air duct; and a fuel vapour absorbing filter element mounted adjacent to or separate from said air cleaning filter element in said induction air duct, said fuel vapour absorbing filter element including a filter material layer including a layer for absorbing fuel vapours, wherein the fuel vapour absorbing filter element is arranged to absorb fuel vapours in the induction air duct when the engine is switched off, and to allow induction air to flow unimpeded past the fuel vapour absorbing filter element when the engine is running.

Materials such as active carbon materials have been found to have attractive properties with respect to hydrocarbons, such as internal combustion engine fuels. Although hydrocarbon vapours cannot be bound to the active carbon material by strong forces, the movement of the vapour will be slowed by the filter element, or canister. However, as the mass flow of hydrocarbons in vapour form through the induction air duct is very slow, said vapours can be trapped in the filter element and prevented from escaping to the atmosphere. In order to achieve absorption of hydrocarbons in an intake air duct, the fuel vapour absorbing filter element is only required to cover a part of the available cross-sectional area of the induction air duct. Apart from active carbon, any hydrocarbon absorbing material having the required properties can be used. The fuel vapour absorbing filter element may cover up to 50%, preferably between 30-50%, of the total cross-sectional area of a filter casing containing the filter element, or of a duct provided with such a filter element. Said cross-sectional area is taken in a plane through the duct or casing, which plane coincides with a plane through the filter element.

Such an arrangement will trap hydrocarbon vapours flowing in one direction, when the engine is switched off, while allowing free flow of induction air to the engine during normal operation. When the engine is running, part of the flow of induction air will pass through the fuel vapour absorbing filter element and remove the fuel vapours, which will be drawn into the combustion chambers of the engine.

The fuel vapour absorbing filter element may be placed either separate from or adjacent the existing air cleaning filter for airborne particles, etc.. When placed as a separate unit, the fuel vapour absorbing filter element is provided with a casing preferably placed between said air cleaning filter and the throttle, injection units or the air intake manifold of the engine. The filter element itself may be arranged in several different positions inside said casing, such as around the periphery, to one or both sides or centrally arranged in the casing.

The fuel vapour absorbing filter element can also be placed within the same casing as the air cleaning filter. Similarly, the fuel vapour absorbing filter element may be arranged in several different positions inside said casing, such as around the inner periphery of, to one side of or centrally arranged in the air cleaning filter casing. The fuel vapour absorbing filter element may be positioned so that it is arranged near an inlet or outlet conduit of the air filter casing, but this is not a requirement. The absorbing properties of the active carbon allows the fuel vapours to be absorbed even if the filter element is placed at a distance from an inlet or outlet, providing the flow velocity of the vapours is sufficiently low.

According to a further embodiment, the fuel vapour absorbing filter element can be given an aerodynamic shape that minimises resistance to air flow of induction air in the induction air duct when the engine is running. Similarly, the filter element can also be given an aerodynamic shape that maximises resistance to air flow in the reverse direction of induction air in the induction air duct when the engine is switched off, which will give a more efficient absorption of hydrocarbon vapours.

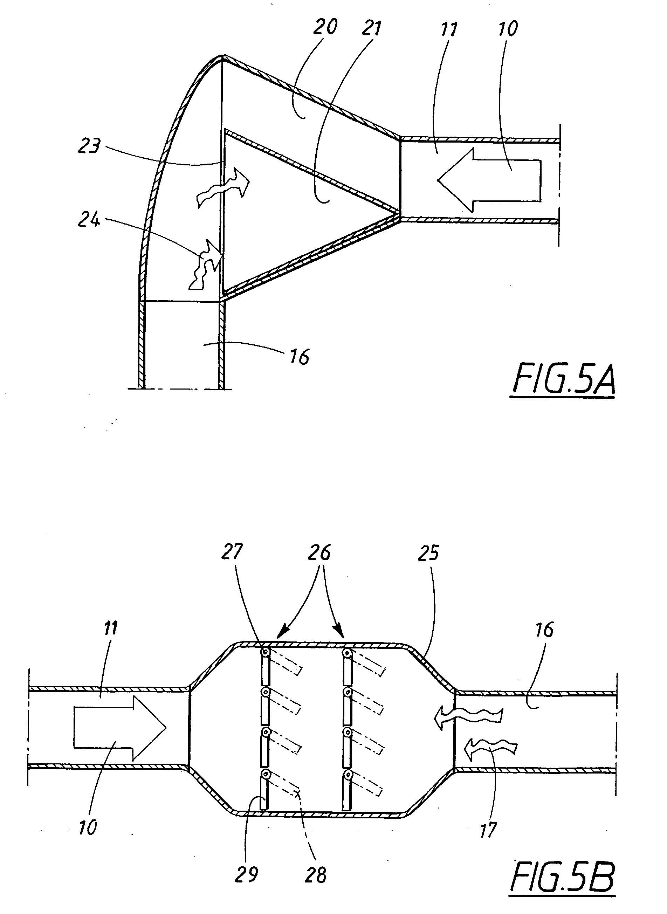

When placed in a duct, the filter element may be placed in several different positions, as described above, such as around the inner periphery of, to one side of or centrally arranged in the duct. If placed to one side or around the periphery of a duct, the filter element may comprise a ramp to facilitate air flow for intake air. Said ramp may end in a substantially flat surface, facing in the opposite direction of the normal intake air flow, which surface impedes the flow of evaporated fuel. A centrally arranged filter element may be in the form of a cone (see also Fig. 5A) or a hemisphere, and could be supported by struts extending from the inner periphery of the duct. The conical or hemispherical end of such a filter element would be arranged facing the normal flow of intake air.

The fuel vapour absorbing filter element is preferably dimensioned to last the lifetime of the vehicle, or at least a minimum period of e.g. 15 years. If the absorbing filter element should require to be replaced, for instance when the absorptive properties of the filter falls below a desired level, the filter may be arranged as a replaceable element or cassette. Such a replaceable element may either be removed by opening a section of the casing, as for a standard air cleaner filter casing, or by releasing and withdrawing the element without opening the casing.

The fuel vapour absorbing filter element itself preferably comprises a central absorbing filter layer of, for instance, active carbon having a layer of foam or some other suitable air permeable material, for instance a plastic material, on either side. In order to give the filter element a certain required stiffness, to prevent it from collapsing during a large flow of induction air, it preferably comprises at least one support element placed on one or both sides of said active carbon and foam layers. The support element preferably has a rigid structure and can be shaped as an open grid having a square, rectangular or other pattern, allowing air to flow through said support element. Said supporting element or elements may be self-supporting or be held together by a frame or cassette that holds the layers making up the filter element together. Such supporting elements, frame or cassette may be held together using attachment means through said layers or around the outer periphery thereof. According to a preferred embodiment, a pair of supporting elements enclose the upper and lower sides as well as the outer edges of the filter element. Said supporting elements can be glued together or mechanically connected by known attachment means, such as a snap-on attachment.

### FIGURES

A number of embodiments of the invention will be described in the following text with reference to the attached drawings, wherein;
- Figure 1A: shows a filter element placed in the lid of an air filter housing;
- Figure 1B: shows a filter element placed in the lid of an air filter housing;
- Figure 1C: shows a filter element placed in the lid of an air filter housing;
- Figure 2: shows an exploded view of a filter element according to one embodiment of the invention;
- Figure 3: shows the flow of induction air during normal engine operation;
- Figure 4: shows the flow of evaporated fuel when the engine is switched off;
- Figure 5A: shows a second embodiment of a filter element according to the invention;
- Figure 5B: shows a third embodiment of a filter element according to the invention.

Note that the various parts of the embodiment shown in the drawings are not drawn to scale. For reasons of clarity, certain parts may be exaggerated or drawn smaller to facilitate understanding of the drawings.

### EMBODIMENTS OF THE INVENTION

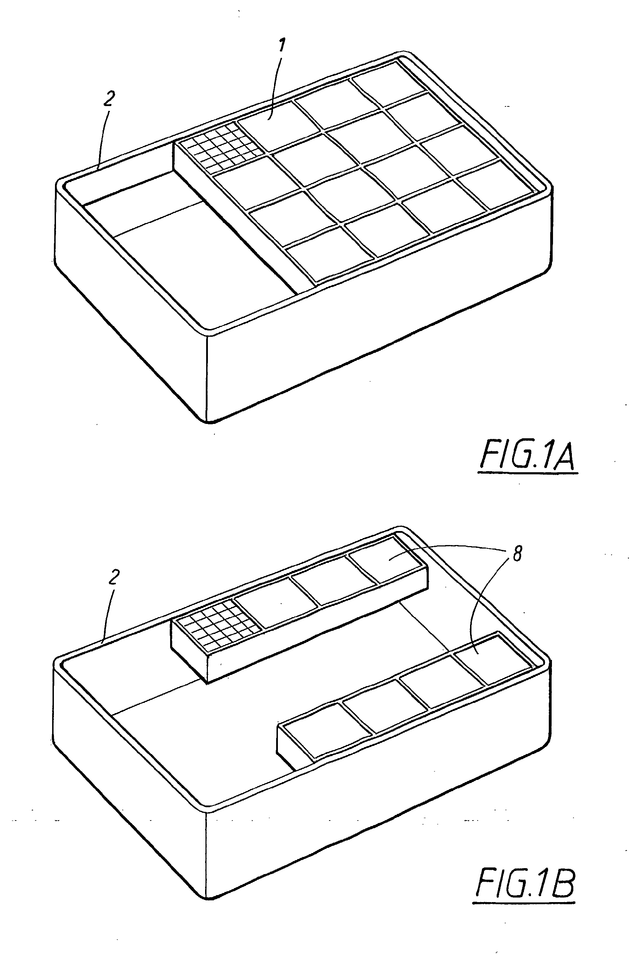

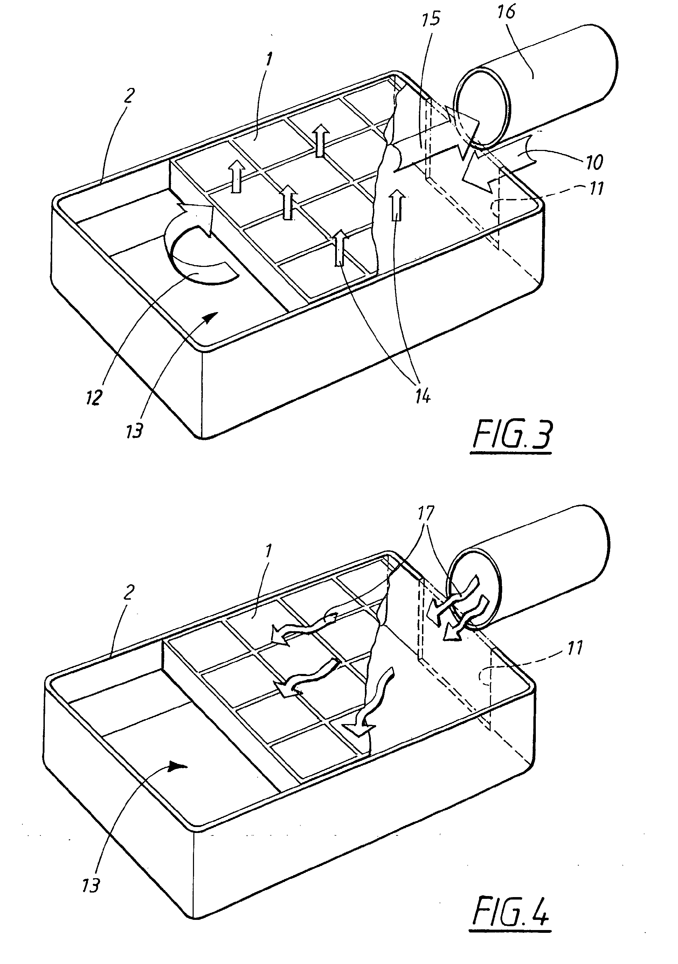

Figure 1A shows a fuel vapour absorbing filter element 1 placed in an upper section, or lid, of a casing 2 for an air cleaning filter. The casing 2 has a pair of facing end walls, a pair of facing side walls, a bottom section and an upper section. For reasons of clarity, the upper, or lid section of the air filter and the attachments for any conduits are not shown. As can be seen from this Figure, the filter element 1 only covers part of the total available cross-sectional area of the casing 2. In this case the filter element 1 extends from an end wall of the casing 2 and between both side walls. In order to allow an unimpeded air flow, the filter element 1 only extends along part of the length of the side walls. The flow of air through the air filter casing and the filter element is shown in Figure 3.

The amount of active carbon used in the fuel vapour absorbing filter element 1 may be varied by means of the thickness or the surface area of the layer 3 containing the active carbon, depending on the maximum volume of vapour to be absorbed by the filter element 1.

Figure 1B shows an alternative embodiment of the invention, wherein the fuel vapour absorbing filter element comprises a pair of identical filter element sections 8 placed along the side walls of the casing, extending from an end wall along a part of said side wall. This will allow the main flow through the casing 2 to pass between the filter elements 8.

Figure 1C shows a further alternative embodiment of the invention, wherein the fuel vapour absorbing filter element comprises a filter element 9 placed along the entire length of a side wall of the casing.

It is of course possible to arrange the filter element 9 shown in Figure 1C at a distance from the side wall, or even centred between the side walls. In this case the filter element 9 is supported at its ends only, which ends are attached to the end walls of the air filter casing 2.

Although the fuel vapour absorbing filter element as shown in Figures 1 A-C is described as being arranged in an air filter casing, the same arrangement of filter elements can be used when said filter element is placed in a casing separate from the air filter.

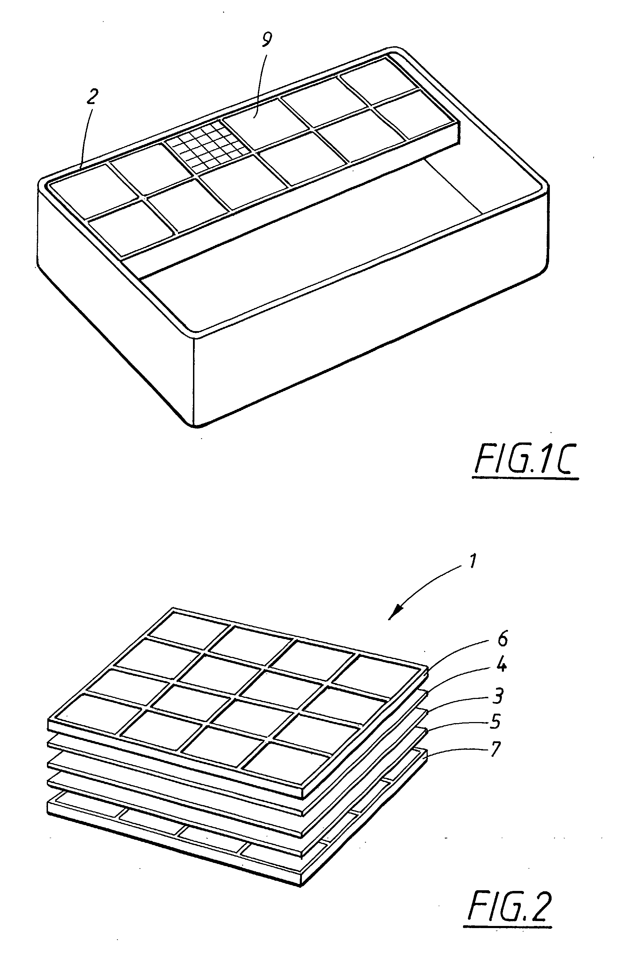

A fuel vapour absorbing filter element according to a preferred embodiment is shown in Figure 2. A central active carbon layer 3 is enclosed by a pair of layers 4, 5 made from an air permeable material, such as a foamed plastic material or other suitable material. In order to give the assembly sufficient structural rigidity, a pair of outer, supporting elements 6, 7 are provided. These supporting elements 6, 7 are made from a plastic material, preferably a thermoplastic material such as polypropylene. However, the choice of materials in either of the foam layers or the supporting elements are not essential to the invention. It is also possible to use some other fuel absorbing material, instead of active carbon. The supporting elements have an open grid structure that is both sufficiently close to make the assembly both self-supporting, and sufficiently open to allow it to be air permeable. For this reason the outer surfaces of the supporting elements has a perforated or mesh structure, or similar. However, the form of these air permeable surfaces is not vital to the invention. For this reason, and for reasons of clarity, such a surface has only been indicated in one of the grids shown in Figures 1A-C.

Figure 3 shows the flow of induction air during normal operation of the engine. A flow of intake air 10 is supplied to the air cleaning filter casing 2 through an opening or intake conduit 11, whereby the main flow 12 is directed parallel to and around the fuel vapour absorbing filter element 1 through an open section 13 of the cross-sectional area of the casing not covered by said filter element 1. A partial air flow 14 will pass directly through said filter element 1, thus removing any absorbed fuel vapour from the filter element 1. The main and partial flow 12, 14 will then combine to make up the induction air flow 15 that leaves the air cleaning filter casing 2 through an induction conduit 16 placed in the same end of the casing as the opening 11 for the air inlet.

In order to enable a free and unimpeded flow of induction air through the open section 13 of the casing 2, the fuel vapour absorbing filter element 1 may cover up to 50%, preferably between 30-50%, of the total cross-sectional area taken up by the filter element 1 and the open section 13. These values may change depending on the amount of active carbon used, the thickness of the filter element and/or shape of the casing or duct.

When the engine is switched off, the flow of induction air is interrupted. Depending on the ambient temperature, any fuel present in the induction duct or manifold, before or after the throttle, will begin to evaporate. As the air upstream of the induction duct has no or a lower concentration of fuel vapour the evaporated fuel will slowly flow in the reverse direction, towards the air cleaning filter, as shown in Figure 4. As evaporated fuel 17 very slowly flows out of the induction air conduit 16 into the air cleaning filter casing 2, it will come into contact with and begin to be absorbed by the fuel vapour absorbing filter element 1. Due to the slow flow rate of the evaporated fuel, the vapours will be absorbed by said filter element 1 before reaching the open section 13 of the air cleaning filter casing 2.

Although the above examples describe a fuel vapour absorbing filter element 1 in connection with an air filter casing, it is of course also possible to arrange the filter element 1 in a separate casing. Such a casing would preferably, but not necessarily, be placed between the air cleaning filter and the air inlet manifold (not shown).

The above embodiments show a fuel vapour absorbing filter element 1 in the form of a rectangular, flat cassette placed in the air cleaning filter casing 2. The main flow of induction air will, as described above, flow along one side of the filter element 1, around its edge and back along the opposite side. In this example, the casing 2 may be aerodynamically shaped internally in order to minimise losses caused by added resistance and turbulence as induction air is guided through the casing 2.

According to a further embodiment, it is also possible to place the fuel vapour absorbing filter element in a different position either in the casing or in the induction air conduit. It is also possible to give the filter element a shape that has enhanced aerodynamic properties in the normal direction of flow, while the shape may be flow restricting or partially blocking in the opposite direction. Such a filter element may be provided with front section having a conical, wedge, hemispherical or other suitable geometric shape, facing the normal air flow, and a planar, open or closed rear section facing the reverse flow of vapours. An example of such a filter element is shown in Figure 5A. Intake air 10 (indicated with a dotted line) flows through an intake conduit 11 into a casing 20 having a generally conical shape. A section, such as the base, of said casing 20 may be removable in order to enable replacement of the filter element 21. A conical filter element 21 with an open base 23 is placed inside said casing 20, whereby both conical shapes are in contact along a common generatrix, or contact line. The base of the casing and the filter element are positioned in the same plane and are in, or nearly in, peripheral contact with the induction air conduit 16. The main flow of induction air will pass around the outside of the filter element 21, across its open base 23 and into the induction air conduit 16. Evaporated fuel 24, however, will flow either into the open base 23 of the filter element 21 or along the narrow space between the filter element 21 and the casing 20, near the common generatrix, where the vapour will be trapped by an active carbon layer in the conical part of said filter element 21.

The relative sizes of the generally conical casing and the conical filter element are determined by the required induction air flow rate and the maximum amount of vapour to be absorbed. The general layered construction of the filter element 21 has been described above in connection with Figure 2. Obviously, the various parts of the filter as shown in Figure 1 will have to be shaped to give the desired conical form.

The filter element may also be made up of multiple sections protruding into a casing or conduit. Such a filter element may be in the shape of fixed or movable louvres or airfoils. An example of a filter element comprising a number of independently pivotable louvres is shown in Figure 5B. The example shows an intake air flow 10 in an air intake conduit 11 entering a casing 25 in which a number of freely pivoted louvres 26 are positioned at right angles to the flow of air. Said louvres 26 can extend along horizontal pivotal axes 27 across the entire width of the casing 25, or be divided into a number of sections along said axis. Said axes 27 are placed in parallel in a vertical plane through the casing 25. Due to the relatively high velocity and flowrate of induction air, the louvres 26 will swing to an open position 28 (indicated by dotted lines) allowing free flow past the filter elements into the induction air conduit 16. The flow of evaporated fuel 17 in the reverse direction, however, is insufficient to move the louvres 26, which will remain in their vertical positions 29 in order to absorb the vapour. Although not shown in Figure 5B, the louvres 26 only cover a part of the entire cross-sectional area in a plane through the louvres in their vertical positions.

Figure 5B shows an arrangement using two sets of louvres, but it is of course possible to use only one or more than two such sets. The cross-sectional area of the casing, the thickness of the active carbon layer in the louvres and the number of sets of louvres can be varied according to the required induction air flow rate and the maximum amount of fuel vapour to be absorbed. The general layered construction of the filter element has been described above. Each set of louvres 26 may be mounted in a replaceable frame or cassette that can be withdrawn from the casing 25 in a direction perpendicular to the main axis of the said casing, through an opening therein.

As stated above, the filter element or elements can be given a multitude of different shapes and be placed in several different positions in a duct, casing or similar arrangement. Therefore, the invention is not limited to the above examples, but can be varied within the scope of the claims.

## Claims

1. Air cleaning means for an internal combustion engine comprising; an induction air cleaning filter element placed in an induction air duct; and a fuel vapour absorbing filter element (1) mounted adjacent to or separate from said air cleaning filter element in said induction air duct,
**characterized in that** the fuel vapour absorbing filter element (1) is arranged to absorb fuel vapours in the induction air duct when the engine is switched off, and to allow induction air to flow unimpeded past the fuel vapour absorbing filter element (1) when the engine is running.

2. Air cleaning means according to claim 1,**characterized in that** the fuel vapour absorbing filter element (1) only covers a part of the available cross-sectional area of the induction air duct.

3. Air cleaning means according to claim 2, **characterized in that** the fuel vapour absorbing filter element (1) covers up to 50% of the available cross-sectional area of the induction air duct.

4. Air cleaning means according to either of claims 1-3, **characterized in that** the fuel vapour absorbing filter element (1) is placed in a casing separate from the air cleaning filter, wherein said fuel vapour absorbing filter element is arranged around the periphery of said casing.

5. Air cleaning means according to either of claims 1-3, **characterized in that** the fuel vapour absorbing filter element (1) is placed in a casing separate from the air cleaning filter, wherein said fuel vapour absorbing filter element is arranged to one side of said casing.

6. Air cleaning means according to either of claims 1-3, **characterized in that** the fuel vapour absorbing filter element (1) is placed in a casing separate from the air cleaning filter, wherein said fuel vapour absorbing filter element is centrally arranged in said casing.

7. Air cleaning means according to either of claims 1-3, **characterized in that** the fuel vapour absorbing filter element (1) is placed in the air cleaning filter casing, wherein said fuel vapour absorbing filter element is arranged around the periphery of said casing.

8. Air cleaning means according to either of claims 1-3, **characterized in that** the fuel vapour absorbing filter element (1) is placed in the air cleaning filter casing, wherein said fuel vapour absorbing filter element is arranged to one side of said casing.

9. Air cleaning means according to either of claims 1-3, **characterized in that** the fuel vapour absorbing filter element (1) is placed in the air cleaning filter casing, wherein said fuel vapour absorbing filter element is centrally arranged in said casing.

10. Air cleaning means according to any of the above claims 1-9, **characerized in** that the fuel vapour absorbing filter element (1) has an aerodynamic shape that minimises resistance to air flow of induction air in the induction air duct when the engine is running.

11. Air cleaning means according to any of the above claims 1-10, **characterized in that** the fuel vapour absorbing filter element (1) has an aerodynamic shape that maximises resistance to air flow in the reverse direction of induction air in the induction air duct when the engine is switched off.

12. Air cleaning means according to any of the above claims 1-11, **characterized in that** the fuel vapour absorbing filter element (1) is arranged as a replaceable element or cassette.

13. Air cleaning means according to any of the above claims 1-12,**characterized in that** the fuel vapour absorbing filter element (1) comprises a central absorbing filter layer (3) having a layer of a foamed plastic material (4, 5) on either side.

14. Air cleaning means according to claim 13, **characterized in that** the fuel vapour absorbing filter element (1) comprises a support element (6) placed on at least one side of said absorbing filter layer (3) and foam layers (4, 5).

15. Air cleaning means according to claim 14, **characterized in that** the fuel vapour absorbing filter element (1) comprises a pair of support elements enclosing said absorbing filter layer (3) and foam layers (4, 5).

16. Air cleaning means according to either of the above claims 14 or 15, **characterized in that** the fuel vapour absorbing filter element (1) comprises a rigid support element (6) shaped as an open grid that is both self-supporting and air permeable.

17. Air cleaning means according to any of the above claims 1-16,**characterized in that** the fuel vapour absorbing layer (3) contains a hydrocarbon absorbing material.

18. Air cleaning means according to claim 17, **characterized in that** the hydrocarbon absorbing material contains active carbon.
